Europäisches Patentamt

(19) European Patent Office

Office européen des brevets

(11) Publication number: **0 088 054**
**B1**

(12) **EUROPEAN PATENT SPECIFICATION**

(45) Date of publication of patent specification: **21.06.89**

(21) Application number: **83830043.2**

(22) Date of filing: **25.02.83**

(51) Int. Cl.⁴: **G 01 S 17/02**

(54) **Device for the determination of the distance of an area illuminated by a pulse laser.**

(30) Priority: **01.03.82 IT 4788482**

(43) Date of publication of application:
**07.09.83 Bulletin 83/36**

(45) Publication of the grant of the patent:
**21.06.89 Bulletin 89/25**

(84) Designated Contracting States:
**DE FR GB NL SE**

(56) References cited:
**US-A-3 817 620**

(73) Proprietor: **SELENIA INDUSTRIE
ELETTRONICHE ASSOCIATE S.p.A.
Via Tiburtina, KM 12.400
I-00131 Roma (IT)**

(72) Inventor: **Rocchi, Luigi
Via Pietro Venturi, 61
F-00149 Roma (IT)**

(74) Representative: **Gustorf, Gerhard, Dipl.-Ing.
Patentanwalt Dipl.-Ing. Gerhard Gustorf
Bachstrasse 6 A
D-8300 Landshut (DE)**

Courier Press, Leamington Spa, England.

## Description

The invention concerns a technique and circuit for the determination of the distance between a site on which the circuit itself is installed and the area illuminated by a pulsed laser ray.

A preferential but not unique field of application of the invention is the so-called electronic warfare. If, for example, the invention is integrated into laser alarm devices (laser alarm devices are equipments which detect the presence of laser signals in the environment and evaluate the characteristic parameters of them) it becomes possible to identify the target of a weapon system which is supported by laser technology i.e. the objective pointed at by the designator of a semi-active guided weapon, as it will be better seen below.

Another possible field for the use of the invention is its insertion in a feedback loop of a weapons system for the automatic pointing of a laser beam.

The device of the invention determines said distance by measuring an angle and a time interval, as will be better illustrated below.

Systems performing the above-described functions are not known.

In particular in the field of electronic warfare it does not appear that the laser alarm devices at present produced (see Table 1) are capable of measuring the distance between the platform on which they are installed and area illuminated by a laser.

For example the laser alarm device known as LAHAWS for tanks (produced by Fairchild Camera and Instrument Corporation of the USA) indicates to the operator the detection of any radiation associated with a laser also if only recieved by atmospheric diffusion. Further the laser scenario is displayed on a cathode ray tube screen providing information regarding the elevation and azimuth but not the distance of the area undergoing laser pointing.

Basically the device of the invention determines the distance between a platform on which it is installed and an area illuminated by a pulsed laser by measuring the time interval between the instant of arrival of the pulse received directly from the laser by the diffusion effect of the optical surfaces and the instant of arrival of the same reflected laser pulse coming from the illuminated area.

This invention will now be described with reference to the drawings of the attached figures, in which:

Fig. 1 shows the geometry of a typical laser scenario;

Fig. 2 shows the plane geometry of Fig. 1;

Fig. 3 shows a diagram of the behaviour of the error in the estimate of the distance $\overline{BI}$ as a function of the error in measuring the angle $\delta$;

Fig. 4 shows the block diagram of a laser alarm device with a "measurer of the distance $\overline{BI}$ and specific alarm".

Fig. 5 shows the block diagram of the "measurer of the distance $\overline{BI}$ and specific alarm" referred to in Fig. 4.

With reference to the drawings, the device of the invention allows the distance to be determined between a platform on which it is installed and the area illuminated by a pulse laser by determining the time interval $\Delta t$ between the instant of arrival of the pulse received directly from the laser by the effect of diffusion of the optical surfaces of the transmitter and the instant of the arrival of the same reflected laser pulse coming from the illuminated area. The interval $\Delta t$ is proportional to the difference of the two paths: laser-platform and laser-illuminated area-platform.

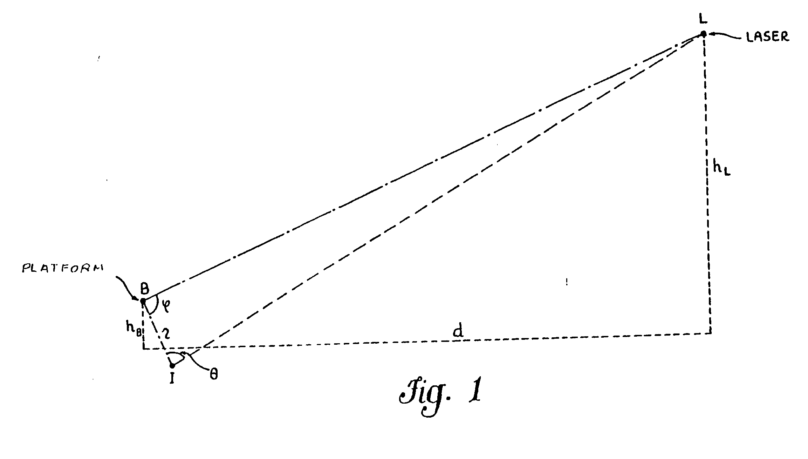

With reference in particular to Fig. 1 a pulsed laser L illuminates the point I situated at the side with respect to platform B with reference to the line of sight L—B.

The heights of L and B are indicated respectively with $h_L$ and $h_B$, the height of I being nil.

The angle $\varphi$ represents the elevation of L observed from the platform B and $\theta$ represents the difference of azimuth of the points L and I.

The interval $\Delta t$, already previously defined, is proportional to the difference $\Delta R$ of the paths:

$$\Delta R = \overline{LI} + \overline{IB} - \overline{BL} \tag{1}$$

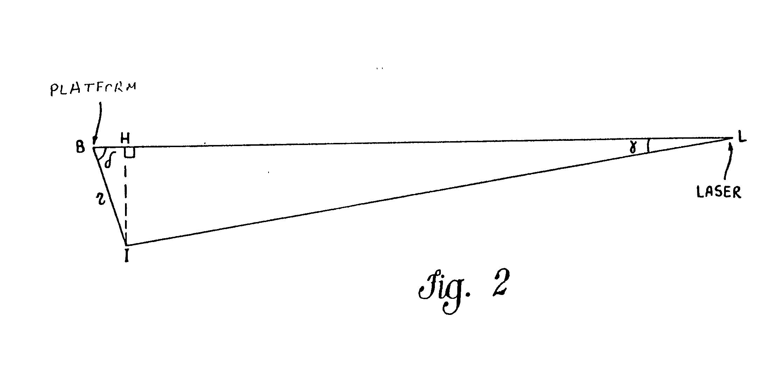

Considering the scenario on the plane identified by the points B, I and L, with the notations of Fig. 2 ($\delta = I\hat{B}L$, $\gamma = B\hat{L}I$) we may write:

$$\overline{BI} = r \approx \frac{c \cdot \Delta t}{1 - \cos \delta} \tag{2}$$

c being the velocity of electromagnetic radiations in air.

The formula (2) is approximated in so far as the difference between $\overline{IL}$ and $\overline{HL}$ with respect to r has been neglected (H being the foot of the orthogonal projection of I on BL).

This approximation improves with the diminishing of the angle $\gamma$ and is in general acceptable. In the common naval and terrestrial scenarios exemplified in Table 2, the error which is made in estimating $\overline{BI}$ with the formula (2) is less than 3% (it should be noted that the angles $\gamma$ are less than 2 degrees).

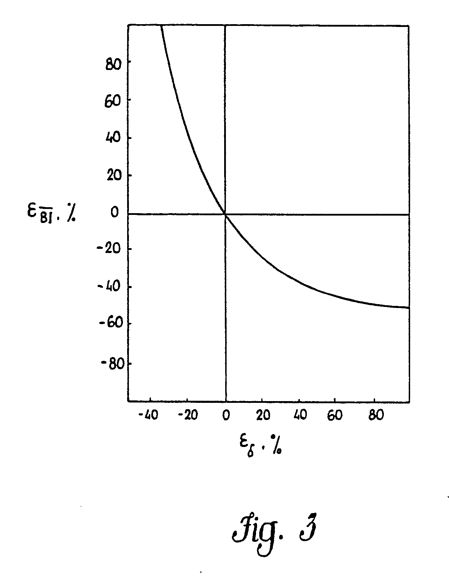

Figure 3 shows the percentage error $\varepsilon\overline{BI}$ in the estimate of $\overline{BI}$ as a function of the percentage error $\varepsilon\delta$ on the value of the angle $\delta$; it is noted that the modulus of $\varepsilon\delta$ must be less than 10% if an error of less than 20% is to be achieved in the measurement of BI. On the contrary a percentage error of $\varepsilon_{\Delta t}$ in the measurement of the interval $\Delta t$ is transferred identically in the estimate of $\overline{BI}$ given the linearity of the relationship (2) with respect to $\Delta t$.

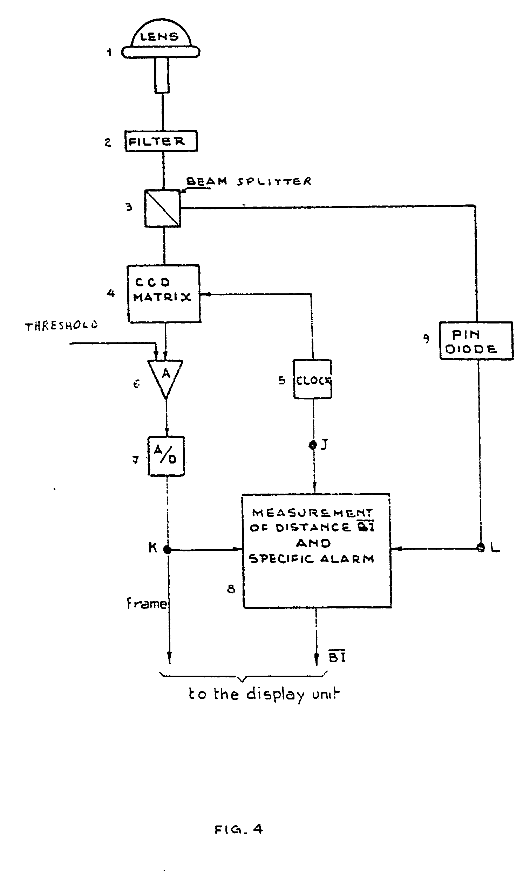

Now a form of realization of the circuitry of the invention at present preferred will be described within the general structure of a laser alarm device as shown in Fig. 4.

The block 8 labelled as "measurement of distance $\overline{BI}$ and specific alarm" realizes the function (2) previously illustrated.

Referring to Fig. 4, the light collected by the wide angle objective (1) is filtered with a narrow band optic filter (2) centred on the laser frequency.

The beam is then splitted in block 3 formed by a beam splitter prism and one part is fed to a PIN type photo diode (9) and the other part (about 80%) is fed to a photo detector matrix (4), made for example with a CCD matrix.

The output of the shift register associated with matrix (4) is amplified by the amplifier (6) and converted into a numerical signal in the analogue to digital converter (7).

The signal obtained (frame) is the serial representation of the laser scenario. The laser scenario is reconstructed on the screen of a cathode ray tube in a display unit not shown in the figure.

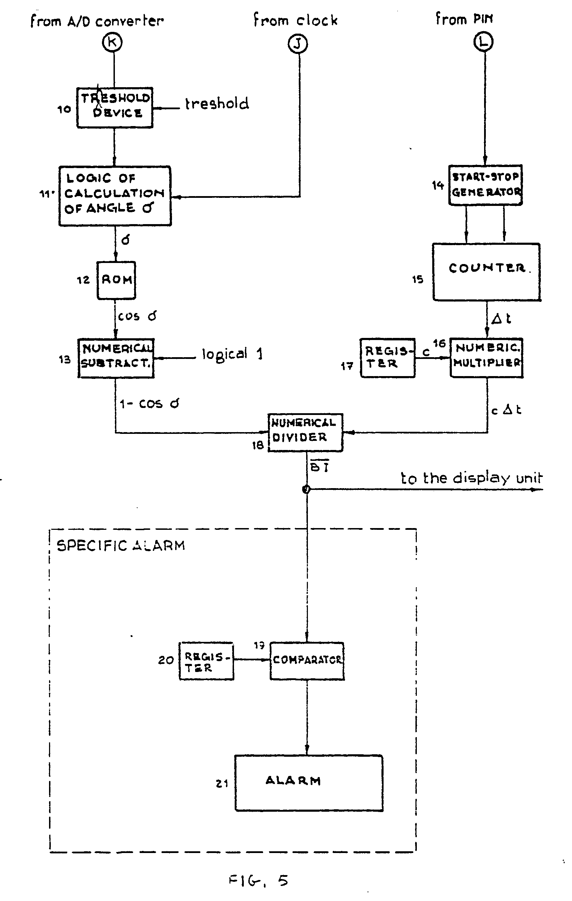

The shift register associated with the photo-detector matrix is driven by a timing generator shown in block (5). The timing pulses, together with the signals coming from the analogue to digital converter (7) and from the PIN diode (9) form the inputs to the circuit block (8) whose structure is better illustrated in Fig. 5.

In this figure the inputs K, J, L are associated respectively with the points K, J, L of Fig. 4.

The above referred to "frame" signal is processed in the logic of block (11) after having been passed through a threshold device (10) which eliminates the weakest emissions coming from the diffusion in the atmosphere and emphasises the two peaks which represent the laser and the illuminated area which is the source by reflection. The logic (11) controlled by the same timing generator indicated by block (5) in Fig. 4 extracts the numeric value of the angle $\delta$ with an algorithm which takes into account the distortion introduced by the wide angle objective (1) of Fig. 4.

The measurement of the angle $\delta$ is performed by the unit (12) containing a ROM memory for the calculation of the cosine of this angle. In cascade with block (12) there is the numerical subtractor, block (13), which gives at the output $(i-\cos \delta)$ representing the denominator of the function (2) to be calculated.

The delay $\Delta t$ is measured with a counter shown in block (15) which is activated by a start and stop generator (14) initiated by the arrival of the pulse received directly from the laser and inhibited by the arrival of the reflected pulse.

The delay $\Delta t$ multiplied in block (16) by a constant c contained in a register (17) constitutes the numerator of the function (2) which is to be calculated.

The output of the numerical divider (18) therefore furnishes the estimate of the distance $\overline{BI}$ and it is fed both to the display unit not shown and to a threshold alarm device included in the block shown dotted in Fig. 5 and entitled "specific alarm".

The measurement of the distance $\overline{BI}$ is compared in the comparator (19) with a "minimum danger distance" memorized in the register (20). If $\overline{BI}$ is less than this distance, an acoustic and/or luminous alarm (21) is activated to warn the operator that the platform on which the laser alarm device of the invention is installed, is directly threatened.

It should be noted that the "minimum danger distance" is a function of the type of weapon which constitutes the threat, for example semi-active guided weapon or artillery, of platforms, e.g. tank or ship, and of the scenario. As an example for semi-active guided weapons against tanks this distance is about 50 metres in wide scenarios.

One of the possible applications of the invention is, as seen, the integration in laser alarm devices which provide a representation of the scenario such as, for example, the above quoted LAHAWS.

For the rest, the determination of the radiations in elevation and azimuth is indispensible for the effecting of efficient counter measures.

Consider, for example, a common field situation: a formation of tanks attack by a semi-active guided weapon system such as Copperhead or SALGP laser guided projectiles.

A laser alarm device per tank, if it is equipped with a measurer of the distance $\overline{BI}$ and specific alarm as in the invention can:

1) reveal the direct threat to the tank equipped with the laser alarm device in the first phase of a typical fire sequence, the indirect designation, i.e. with about 30 seconds before the ultimate phase before the explosion (the direct designation).

In fact the specific alarm of Fig. 4 warns the operator if the distance of the area illuminated is less than the indicative value of 50 metres (it should be noted that the usual military tactis provides that a designator, i.e. the laser associated with a semiactive guided weapon, illuminates for at least 30 seconds an area at about 30/50 metres from the victim tank (indirect designation); only in the second phase (direct designation), of a duration of 5—10 seconds, the designator points at the target so that the trajectory of the guided projectile undergoes adjustments until the point of impact).

2) If the condition (1) does not occur, the knowledge of the position of the area pointed at by the laser allows the threatened vehicle to be identified once the positions of the allied tanks in the formation are known.

# EP 0 088 054 B1

It must also be emphasised that to put into operation individual counter measures such as the generation of a smoke screen on evasive manoeuvres with 30 seconds of warning of the direct designation, in a firing sequence that lasts 40/45 seconds, considerably increases the probability of the success of the defence. Further some electronic counter-measures involving deception and confusion are efficient only if put into effect immediately.

TABLE 1

| Code name | Manufacturer | Country | Platform | Displayed parameters of the illuminated area |
|---|---|---|---|---|
| LAHAWS | Fairchild camera instr. | USA | Tank | Elevation and azimuth |
| AM/AUR-2 | Perkin Elmer | USA | Helicopter | Alarm for direct illumination |
| | AEG-Telefunken | West Germany | Tank | Alarm for direct illumination |
| LAWA | Eltro | West Germany | Tank/helicopter | Alarm for direct illumination |
| | Plessey Radar Ltd. | England | Tank | Alarm for illumination in a range of 30 m |
| 451 | Ferranti | England | Tank/helicopter | Alarm for direct illumination |
| RL-1 | Simrad | Norway | Tank | Alarm for direct illumination |

TABLE 2

| $\delta$ degrees | $\overline{BL}$, Km | $\overline{BI}$, m | $\gamma$ degrees | $\Delta t$, ns | Estimated $\overline{BI}$, m | Error, % |
|---|---|---|---|---|---|---|
| 45 | 1,5 | 50 | 1,38 | 50,2 | 51,46 | 2,9 |
| 90 | 1,5 | 50 | 1,91 | 169,4 | 50,83 | 1,7 |
| 135 | 2 | 100 | 1,96 | 573,1 | 100,71 | 0,7 |
| 180 | 2 | 100 | 0 | 666,7 | 100 | 0 |
| 90 | 10 | 300 | 1,72 | 1015 | 304,50 | 1,5 |
| 135 | 15 | 500 | 1,32 | 2858,7 | 502,38 | 0,5 |

TABLE 3

| $\delta$ degrees | $h_B$, m | $h_D$, m | d,KM | $\Delta t$, ns | $\overline{BI}$, m | Estimated $\overline{BI}$, m | Error | Error % |
|---|---|---|---|---|---|---|---|---|
| 45 | 3 | 250 | 1,5 | 53 | 50 | 54,1 | 4,1 | 8,2 |
| 90 | 3 | 250 | 1,5 | 171 | 50 | 51,2 | 1,2 | 2,4 |
| 135 | 3 | 500 | 2 | 285 | 50 | 50,3 | 0,3 | 0,7 |
| 180 | 3 | 500 | 2 | 331 | 50 | 49,7 | 0,3 | 0,7 |

## Claims

1. Device for the determination of the distance between a platform (B) on which the said device is mounted and the area (I) illuminated by a pulse laser (L), characterized by the fact that it contains a means of measuring the time interval between the instant of the arrival of the pulse received directly from the laser through the diffusion of the optical surfaces of the laser and the instant of the arrival of the same laser pulse coming from the area illuminated by the said laser.

4

2. Device as in Claim 1, characterized by the fact that the said means includes a captor of the laser light such as a wide-angle objective (1) associated with a means of detecting the luminous energy, an integral receiver and a receiver to furnish angular data.

3. Device as in Claims 1 or 2 characterized by the fact of having an alarm device associated with it capable of responding at particular time intervals and/or angular situations.

**Patentansprüche**

1. Vorrichtung zur Entfernungsbestimmung zwischen einer Plattform (B), auf der die Vorrichtung montiert ist, und der von einem Impulslaser (L) beleuchteten Zone, dadurch gekennzeichnet, daß sie eine Einrichtung enthält zum Messen des Zeitintervalls zwischen dem Augenblick der Ankunft des Impulses, der durch die Diffusion der optischen Flächen des Lasers direkt von dem Laser empfangen wird, und dem Augenblick der Ankunft desselben Laserimpulses, der von der durch den Laser beleuchteten Zone kommt.

2. Vorrichtung nach Anspruch 1, dadurch gekennzeichnet, daß die Einrichtung einen Aufnehmer für das Laserlicht, z.B. ein Weitwinkelobjektiv (1), dem eine Einrichtung zum Erfassen der Leuchtenergie zugeordnet ist, einen Integral-Empfänger und einen Empfänger zur Lieferung von Winkeldaten aufweist.

3. Vorrichtung nach Anspruch 1 oder 2, dadurch gekennzeichnet, daß eine Alarmvorrichtung zugeordnet ist, die in der Lage ist, bei bestimmten Zeitintervallen und/oder Winkelsituationen anzusprechen.

**Revendications**

1. Appareil pour déterminer la distance entre une plateforme (B) sur laquelle ledit appareil est monté et la surface (I) illuminée par un laser pulsé (L), caractérisé en ce qu'il contient des moyens pour mesurer l'intervalle de temps entre l'instant d'arrivée de l'impulsion reçue directement du laser par la diffusion sur les surfaces optiques du laser et l'instant d'arrivée de la même impulsion laser provenant de la surface illuminée par ledit laser.

2. Appareil selon la revendication 1, caractérisé en ce que lesdits moyens comportent un capteur de lumière laser tel qu'un objectif grand angulaire (1) associé à un moyen de détecter l'énergie lumineuse, un récepteur total et un récepteur apte à donner une valeur angulaire.

3. Appareil selon les revendications 1 ou 2, caractérisé par le fait qu'il comporte un appareil d'alarme qui lui est associé et qui est capable de donner des indications à des intervalles de temps particulier et/ou répondant à diverses configurations angulaires.

*fig. 1*

LASER

PLATFORM

LASER

*fig. 2*

$$\varepsilon_{\overline{BI}} \cdot \%$$

$$\varepsilon_{\delta} \cdot \%$$

$$\mathcal{F}ig. \; 3$$

FIG. 4

4

FIG. 5